# EUROPEAN PATENT APPLICATION

(11) **EP 4 837 754 A1**
(43) Date of publication of application: **11.11.2026**
(21) Application number: 24915039.2
(22) Date of filing: 29.11.2024
(51) Int. Cl.: B60D 1/48, B60D 1/28

(54) **TOW HOOK ASSEMBLY AND VEHICLE**

(30) Priority: 03.01.2024 CN 202410008440
(71) Applicant: BYD Company Limited, Shenzhen, Guangdong 518118 (CN)
(72) Inventor: QIAN, Jiasheng, Shenzhen, Guangdong 518118 (CN); GUO, Xuebo, Shenzhen, Guangdong 518118 (CN); ZHANG, Yinkang, Shenzhen, Guangdong 518118 (CN); WU, Ning, Shenzhen, Guangdong 518118 (CN); ZHANG, Yueqi, Shenzhen, Guangdong 518118 (CN)
(74) Representative: Mathys & Squire
(86) International application number: PCT/CN2024/135586
(87) International publication number: WO 2025/145823

(57) **Abstract**

A trailer hitch assembly and a vehicle are provided. The trailer hitch assembly includes a connecting housing (11) and a trailer hitch, a first locking cavity (111) is formed in the connecting housing (11), a locking portion (112) and a first trigger portion (113) are disposed in the first locking cavity (111), a part of the trailer hitch is adapted to be accommodated in the first locking cavity (111), the trailer hitch includes a driving member and a locking member (14), and the first trigger portion (113) triggers a part of the driving member to cause the driving member to drive the locking member (14) to lock with the locking portion (112).

## Description

### CROSS-REFERENCE TO RELATED APPLICATION

This application claims priority to Chinese Patent Application No. 2024100084405, filed on January 3, 2024 and entitled "TRAILER HITCH ASSEMBLY AND VEHICLE", which is incorporated herein by reference in its entirety.

### TECHNICAL FIELD

The present invention relates to the field of vehicles, and in particular to a trailer hitch assembly and a vehicle.

### BACKGROUND

A trailer hitch is a crucial component of a vehicle, and serves to connect a towing vehicle to a trailer and transmit a towing force. Currently, most vehicle trailer hitches have a simple structure, and the trailer hitch and a vehicle body connecting member are constructed as an integral structure, which affects overall appearance of the vehicle and makes the trailer hitch inconvenient to operate.

To resolve the foregoing problem, in related technologies, the trailer hitch and the vehicle body connecting member can be separately provided, but connection and unlocking processes between the trailer hitch and the vehicle body connecting member are complicated, making the trailer hitch inconvenient to use. Therefore, how to optimize a connection configuration between the trailer hitch and the vehicle body and improve ease of use of the trailer hitch has become an urgent problem to be resolved in the field.

### SUMMARY

The present invention is intended to resolve at least one of technical problems existing in conventional technologies. To this end, an objective of the present invention is to provide a trailer hitch assembly. The trailer hitch assembly according to the present invention has a simple structure and is easy to disassemble, making the trailer hitch more convenient to use and providing good user experience.

The present invention further provides a vehicle including the trailer hitch assembly.

The trailer hitch assembly according to the present invention includes: a connecting housing, wherein a first locking cavity is formed in the connecting housing, and a locking portion and a first trigger portion are disposed in the first locking cavity; and a trailer hitch, wherein a part of the trailer hitch is adapted to be accommodated in the first locking cavity, the trailer hitch including a driving member and a locking member, and the first trigger portion triggers a part of the driving member to cause the driving member to drive the locking member to lock with the locking portion.

According to the trailer hitch assembly of the present invention, the first trigger portion is disposed on the connecting housing to cooperate with the driving member, so that the driving member can drive the locking member on the trailer hitch to cooperate and lock with the locking portion on the connecting housing. In this way, mounting and dismounting operations of the trailer hitch are simple, and the trailer hitch is convenient to use.

According to an embodiment of the present invention, the driving member includes: a first driving member, wherein the first driving member is movably disposed on the trailer hitch and is adapted to drive the locking member to move; and a second driving member, wherein the second driving member is rotatably disposed on the trailer hitch to switch between a first state and a second state, and the second driving member is adapted to cooperate with the first trigger portion to rotate. In the first state, the second driving member restricts movement of the first driving member, and in the second state, the second driving member rotates to allow the first driving member to move and drive the locking member to lock with the locking portion.

According to an embodiment of the present invention, a second trigger portion is disposed on the second driving member, and the second trigger portion is adapted to rotate to the second state under an action of the first trigger portion.

According to an embodiment of the present invention, a first mating portion is disposed on the first driving member, and a second mating portion is disposed on the second driving member; in the first state, the first mating portion abuts against the second mating portion to restrict movement of the first driving member; and in the second state, the second mating portion rotates to allow the first mating portion to move.

According to an embodiment of the present invention, a limiting notch adapted to accommodate the first mating portion is provided on the second mating portion, and the limiting notch is adapted to accommodate movement of the first driving member in the second state.

According to an embodiment of the present invention, the second driving member includes: a base, wherein the second mating portion is disposed on the base, and the limiting notch is provided on the second mating portion.

According to an embodiment of the present invention, the second driving member further includes: an extension section, wherein the extension section is disposed at an end of the base away from the first driving member, and the second trigger portion is disposed at a top of the extension section to be adapted to cooperate with the first trigger portion.

According to an embodiment of the present invention, a first inclined surface is formed on the first trigger portion, and the first inclined surface is disposed in an inclined configuration in a circumferential direction; and a second inclined surface is formed on the second trigger portion, and the second inclined surface is adapted to abut against the first inclined surface and rotate under pushing of the first inclined surface.

According to an embodiment of the present invention, the trailer hitch has a mating section, the mating section is selectively accommodated in the first locking cavity, and a second locking cavity configured to accommodate the locking member, the first driving member, and the second driving member is formed in the mating section.

According to an embodiment of the present invention, a locking opening that communicates the second locking cavity with the first locking cavity is formed on the mating section, the locking opening is adapted to be aligned with the locking portion after the mating section is accommodated in the first locking cavity, and the locking member selectively protrudes from the locking opening and cooperates with the locking portion.

According to an embodiment of the present invention, the trailer hitch assembly further includes: a first elastic member, wherein the first elastic member is disposed around an outer periphery of the extension section, and the first elastic member is adapted to drive the base to abut against the first mating portion in the first state.

According to an embodiment of the present invention, a third inclined surface adapted to cooperate with the first driving member is formed on a side of the locking member facing the first driving member, a fourth inclined surface is formed on the first driving member, and the fourth inclined surface is adapted to abut against the third inclined surface and push the locking member to move toward the locking portion.

According to an embodiment of the present invention, an unlocking inclined surface is formed on the locking member, a locking groove adapted to accommodate the locking member is provided on the locking portion, a mating inclined surface adapted to abut against the unlocking inclined surface is formed on the locking groove, and the mating inclined surface is adapted to guide the locking member into the second locking cavity when the first mating portion disengages from the limiting notch.

According to an embodiment of the present invention, a limiting groove extending toward the locking portion is provided on the locking member, a fixing shaft is disposed in the second locking cavity, one end of the fixing shaft is connected to an inner wall of the second locking cavity, and the other end of the fixing shaft is accommodated in the limiting groove and defines a moving direction of the locking member.

According to an embodiment of the present invention, the trailer hitch assembly further includes: an unlocking member, wherein the unlocking member is rotatably disposed at a bottom of the second locking cavity, and the unlocking member selectively drives the first driving member to move along an extending direction of the second locking cavity.

According to an embodiment of the present invention, the trailer hitch assembly further includes: a second elastic member, wherein the second elastic member is disposed between the first driving member and the second locking cavity.

The following briefly describes a vehicle according to an embodiment in another aspect of the present invention.

The vehicle according to the present invention includes the trailer hitch assembly according to any one of the foregoing embodiments. Because the vehicle according to the present invention includes the trailer hitch assembly according to any one of the foregoing embodiments, mounting and dismounting of the trailer hitch of the vehicle according to the present invention are simpler and faster, storage of the trailer hitch is convenient, and user experience is better.

Additional aspects and advantages of the present invention are partially presented in the following descriptions, partially become clear in the following descriptions, or are learned through practice of the present invention.

### BRIEF DESCRIPTION OF DRAWINGS

FIG. 1 is an exploded view of a trailer hitch assembly according to an embodiment of the present invention;
FIG. 2 is an overall assembly view of a trailer hitch assembly according to an embodiment of the present invention;
FIG. 3 is a top assembly view of a trailer hitch assembly according to an embodiment of the present invention;
FIG. 4 is a cross-sectional view taken along line A-A in FIG. 3;
FIG. 5 is a cross-sectional view showing a connection between a trailer hitch and a connecting housing of a trailer hitch assembly according to an embodiment of the present invention;
FIG. 6 is a cross-sectional view showing a connection between a trailer hitch and a connecting housing of a trailer hitch assembly according to an embodiment of the present invention;
FIG. 7 is a view showing a disconnected state between a trailer hitch and a connecting housing of a trailer hitch assembly according to an embodiment of the present invention;
FIG. 8 is a structural diagram of a mating section of a trailer hitch assembly according to an embodiment of the present invention;
FIG. 9 is a structural diagram of a mating section of a trailer hitch assembly according to an embodiment of the present invention;
FIG. 10 is a structural diagram of a first trigger portion and a second trigger portion of a trailer hitch assembly according to an embodiment of the present invention;
FIG. 11 is a cross-sectional view of a first trigger portion and a second trigger portion of a trailer hitch assembly according to an embodiment of the present invention;
FIG. 12 is a structural view of a first driving member, a second driving member, and a first trigger portion of a trailer hitch assembly according to an embodiment of the present invention; and
FIG. 13 is a diagram of a fifth inclined surface and a sixth inclined surface according to an embodiment of the present invention.

### Reference numerals:

1: trailer hitch assembly;
11: connecting housing; 111: first locking cavity; 112: locking portion; 1121: mating inclined surface; 113: first trigger portion; 1131: first inclined surface; 114: cover plate;
12: mating section; 121: second locking cavity; 122: locking opening; 13: hitch section; 131: ball head cap; 14: locking member; 141: third inclined surface; 142: unlocking inclined surface; 143: limiting groove; 144: fixing shaft;
151: first driving member; 1511: first mating portion; 1512: fourth inclined surface; 1513: second mating teeth; 152: second driving member; 1521: second mating portion; 1522: second trigger portion; 15221: second inclined surface; 1523: base; 15231: limiting notch; 1524: extension section; 1525: sixth inclined surface;
161: first elastic member; 162: second elastic member; 163: limiting portion; 171: unlocking member; 1711: first mating teeth; 172: key; 173: shaft sleeve; 174: protective sleeve; 175: fifth inclined surface.

### DESCRIPTION OF EMBODIMENTS

The following describes embodiments of the present invention in detail. Examples of embodiments are shown in the accompanying drawings. Same or similar reference numerals represent same or similar elements or elements with same or similar functions throughout. The embodiments described below with reference to the accompanying drawings are exemplary and are merely used to explain the present invention, and shall not be construed as a limitation on the present invention.

A trailer hitch is a crucial component on a vehicle, and serves to connect a towing vehicle to a trailer and transmit a towing force. Currently, most vehicle trailer hitches have a simple structure, and the trailer hitch and a vehicle body connecting member are constructed as an integral structure, which affects overall appearance of the vehicle and makes the trailer hitch inconvenient to operate.

To resolve the foregoing problem, in related technologies, the trailer hitch and the vehicle body connecting member can be separately provided, but connection and unlocking processes between the trailer hitch and the vehicle body connecting member are complicated, making the trailer hitch inconvenient to use. Therefore, how to optimize a connection arrangement between the trailer hitch and the vehicle body and improve ease of use of the trailer hitch has become an urgent problem to be resolved in the field.

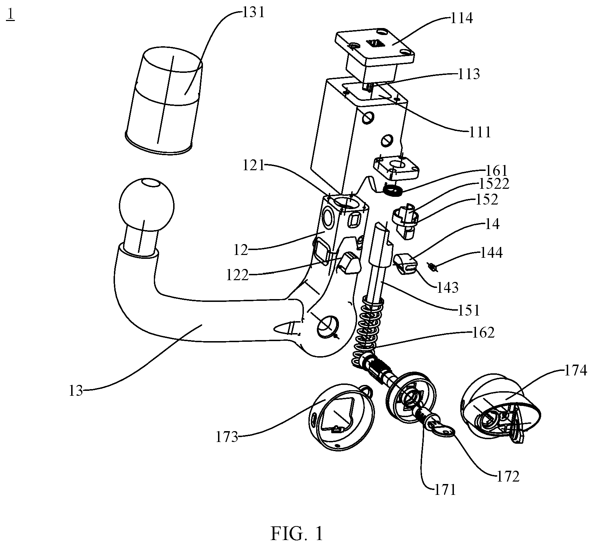

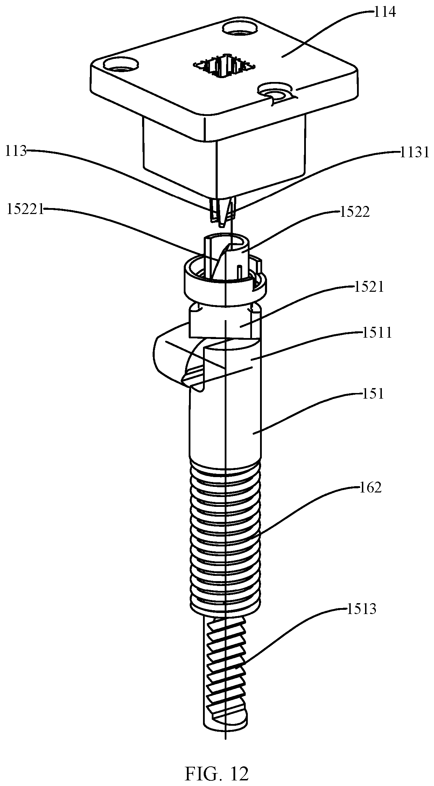

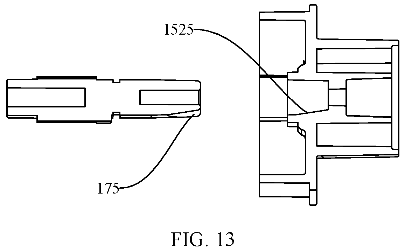

The following describes a trailer hitch assembly 1 according to embodiments of the present invention with reference to FIG. 1 to FIG. 13.

The trailer hitch assembly 1 according to the present invention includes a connecting housing 11 and a trailer hitch, a first locking cavity 111 is formed in the connecting housing 11, a part of the trailer hitch is adapted to be accommodated in the first locking cavity 111, the trailer hitch includes a driving member and a locking member 14, and a first trigger portion 113 triggers a part of the driving member to cause the driving member to drive the locking member 14 to lock with a locking portion 112.

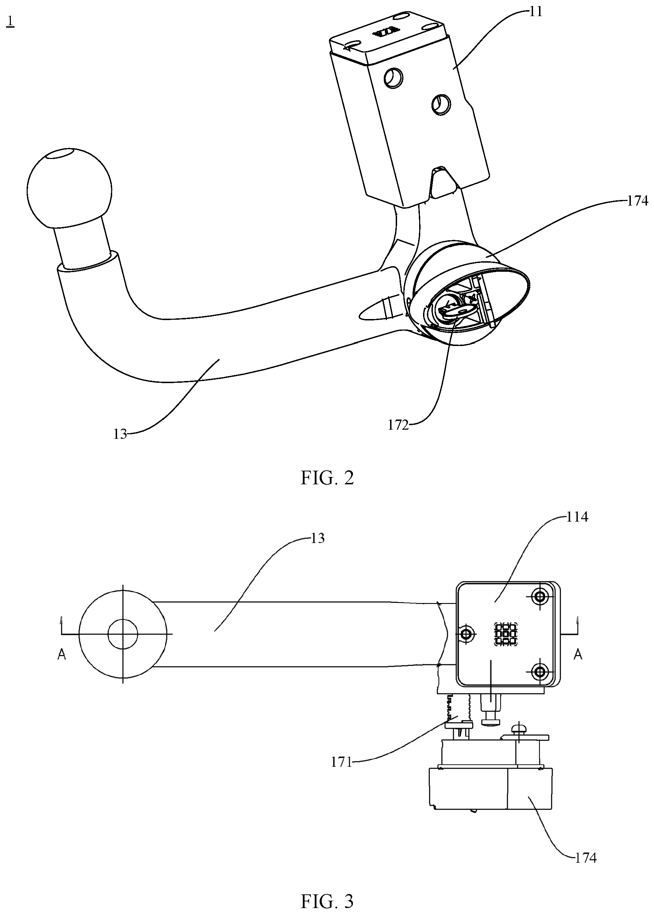

As shown in FIG. 1 and FIG. 2, the connecting housing 11 can be fastened to a cross beam of a vehicle, the connecting housing 11 and the trailer hitch are separately provided, and the first locking cavity 111 is formed in the connecting housing 11. When the trailer hitch needs to be used, the connecting housing 11 serves as a connecting member to connect the trailer hitch to the cross beam of the vehicle. The trailer hitch can be assembled with the cross beam of the vehicle simply by inserting a mating section 12 of the trailer hitch into the first locking cavity 111. After the trailer hitch is used, the trailer hitch only needs to be unlocked and pulled out from the connecting housing 11. The trailer hitch is convenient to use; and since the trailer hitch and the connecting housing 11 are separately provided, the trailer hitch can be stored in a trunk of the vehicle when not in use, thereby ensuring an aesthetic appearance of the entire vehicle.

Specifically, the first trigger portion 113 and a locking portion 112 are disposed in the first locking cavity 111. After a part of the trailer hitch is accommodated in the first locking cavity 111, the first trigger portion 113 triggers the driving member to cause the driving member to drive the locking member 14 to move and cooperate with the locking portion 112 for locking, thereby implementing a locking connection between the trailer hitch and the connecting housing 11. Unlocking of the trailer hitch and the connecting housing 11 can be implemented simply by triggering a part of the driving member and disengaging the locking member 14 from the locking portion 112. The locking and unlocking operations of the trailer hitch and the connecting housing 11 are simple, thereby improving user experience.

According to the trailer hitch assembly of the present invention, the first trigger portion 113 is disposed on the connecting housing 11 to cooperate with the driving member, so that the driving member can drive the locking member 14 on the trailer hitch to cooperate and lock with the locking portion 112 on the connecting housing 11. In this way, mounting and dismounting operations of the trailer hitch are simple, and the trailer hitch is convenient to use.

According to an embodiment of the present invention, the driving member includes a first driving member 151 and a second driving member 152. The first driving member 151 is movably disposed on the trailer hitch and is adapted to drive the locking member 14 to move. The second driving member 152 is rotatably disposed on the trailer hitch to switch between a first state and a second state, and the second driving member 152 is adapted to cooperate with the first trigger portion 113 to rotate. In the first state, the second driving member 152 restricts movement of the first driving member 151, and in the second state, the second driving member 152 rotates to allow the first driving member 151 to move and drive the locking member 14 to lock with the locking portion 112.

Specifically, in the first state, that is, when the trailer hitch and the connecting housing 11 are in a disconnected state, the first driving member 151 cannot move, and the locking member 14 cannot cooperate and lock with the locking portion 112, so that the trailer hitch and the connecting housing 11 are in a separated state. In the second state, the second driving member 152 cooperates with the first trigger portion 113 and rotates. After the second driving member 152 rotates, the locking member 14 is aligned with the locking portion 112, the first driving member 151 moves and pushes the locking member 14 to move, the locking member 14 is in limiting cooperation with the locking portion 112, the trailer hitch and the connecting housing 11 are stably connected, and the locking member 14 fits tightly against an inner wall of the locking portion 112. This can eliminate rattling generated by cooperation between the trailer hitch and the connecting housing 11, and improve user experience.

According to an embodiment of the present invention, a second trigger portion 1522 is disposed on the second driving member 152, and the second trigger portion 1522 is adapted to rotate to the second state under an action of the first trigger portion 113.

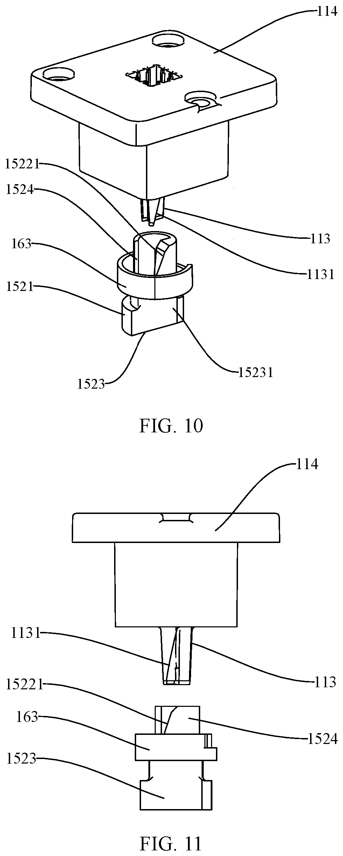

Specifically, in the first state, that is, when the trailer hitch and the connecting housing 11 are in the disconnected state, the second trigger portion 1522 does not cooperate with the first trigger portion 113 and rotate, the second driving member 152 restricts movement of the first driving member 151, and the locking member 14 cannot cooperate and lock with the locking portion 112, so that the trailer hitch and the connecting housing 11 are in the separated state. In the second state, as shown in FIG. 10, under the action of the first trigger portion 113, the second trigger portion 1522 rotates, a second mating portion 1521 rotates, the locking member 14 is aligned with the locking portion 112, the first driving member 151 moves, the first driving member 151 pushes the locking member 14 into the locking portion 112, and the locking member 14 is in limiting cooperation with the locking portion 112, so that the trailer hitch enters the second state, and a connection between the trailer hitch and the connecting housing 11 is stable.

According to an embodiment of the present invention, a first mating portion 1511 is disposed on the first driving member 151, and a second mating portion 1521 is disposed on the second driving member 152; the first mating portion 1511 abuts against the second mating portion 1521 to restrict movement of the first driving member 151; and in the second state, the second mating portion 1521 rotates to allow the first mating portion 1511 to move.

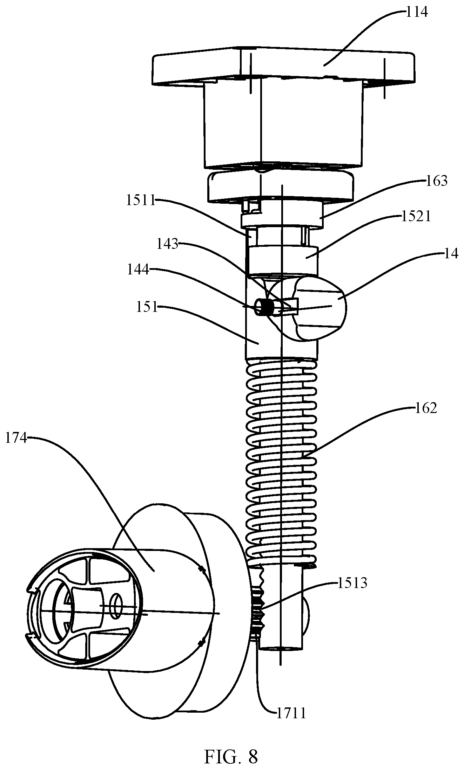

As shown in FIG. 8, the first mating portion 1511 is disposed on the first driving member 151, the second driving member 152 is rotatably disposed at an end of the first driving member 151, and the second mating portion 1521 and the second trigger portion 1522 are disposed on the second driving member 152. In the second state, after the first trigger portion 113 cooperates with and is connected to the second trigger portion 1522, the second trigger portion 1522 rotates, the first mating portion 1511 and the second mating portion 1521 cooperate and drive the first driving member 151 to move upward, and the first driving member 151 moves and pushes the locking member 14 out. When the locking member 14 cooperates and locks with the locking portion 112, the trailer hitch is locked with and connected to the connecting housing 11, preventing the trailer hitch from falling off and ensuring a stable connection of the trailer hitch. In addition, the locking member 14 fits tightly against the inner wall of the locking portion 112. This can eliminate noise and rattling generated when the trailer hitch cooperates with the connecting housing 11.

According to an embodiment of the present invention, a limiting notch 15231 adapted to accommodate the first mating portion 1511 is provided on the second mating portion 1521, and the limiting notch 15231 is adapted to accommodate movement of the first driving member 151 in the second state.

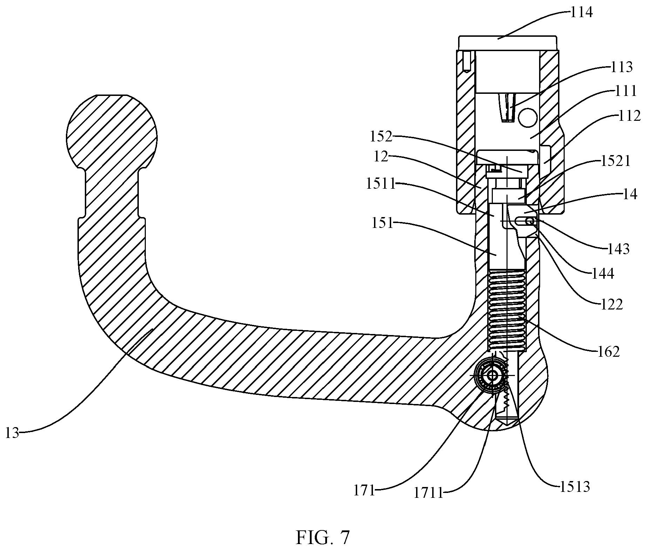

As shown in FIG. 7, in the second state, under the action of the first trigger portion 113, the second trigger portion 1522 rotates and drives the second mating portion 1521 to rotate. The limiting notch 15231 adapted to accommodate the first mating portion 1511 is provided on the second mating portion 1521. After the second mating portion 1521 rotates, the first mating portion 1511 is aligned with the limiting notch 15231 and is accommodated in the limiting notch 15231. At this time, the locking member 14 is aligned with the locking portion 112, the limiting notch 15231 accommodates movement of the first driving member 151, the first driving member 151 moves toward the limiting notch 15231, the first driving member 151 pushes the locking member 14 out of a locking opening 122 and into the locking portion 112, the locking member 14 is in limiting cooperation with the locking portion 112, the trailer hitch and the connecting housing 11 are stably connected, and the locking member 14 fits tightly against the inner wall of the locking portion 112. This can eliminate rattling generated by cooperation between the trailer hitch and the connecting housing 11, and improve user experience.

According to an embodiment of the present invention, the second driving member 152 includes a base 1523, where the second mating portion 1521 is disposed on the base 1523, and the limiting notch 15231 is provided on the second mating portion 1521.

As shown in FIG. 10 and FIG. 11, the second mating portion 1521 is disposed on the base 1523, and the limiting notch 15231 is provided on a side of the base 1523. In the first state, that is, when the trailer hitch and the connecting housing 11 are disconnected, an end of the base 1523 facing the first driving member 151 abuts against the first mating portion 1511 so that the base 1523 can restrict movement of the first driving member 151, the first driving member 151 cannot move, and the locking member 14 is not cooperating with and locked to the locking portion 112. In the second state, the limiting notch 15231 on the base 1523 is aligned with the first mating portion 1511, the first mating portion 1511 is free to move, and the first driving member 151 moves until the first mating portion 1511 is fully accommodated in the limiting notch 15231. At this time, the locking member 14 is aligned with the locking portion 112, movement of the first driving member 151 drives the locking member 14 to move, and the first driving member 151 pushes the locking member 14 out and pushes the locking member 14 into the locking portion 112. After the locking member 14 cooperates with and locks to the locking portion 112, assembling the trailer hitch and the connecting housing 11 is completed. In this application, the limiting notch 15231 is provided on the base 1523 to accommodate movement of the first driving member 151 in the second state, so that the locking member 14 can cooperate and lock with the locking portion 112. Cooperation between the locking member 14 and the locking portion 112 is simple, and the connection between the trailer hitch and the connecting housing 11 is convenient.

According to an embodiment of the present invention, the second driving member 152 further includes an extension section 1524, where the extension section 1524 is disposed at an end of the base 1523 away from the first driving member 151, and the second trigger portion 1522 is disposed at a top of the extension section 1524 to be adapted to cooperate with the first trigger portion 113.

Specifically, in the second state, the extension section 1524 cooperates with the first trigger portion 113, the extension section 1524 abuts against the first trigger portion 113, the extension section 1524 is pushed by the first trigger portion 113 and rotates, the extension section 1524 drives the base 1523 to rotate to cause the limiting notch 15231 on the base 1523 to be aligned with the first mating portion 1511, and the first mating portion 1511 is free to move, so that the first driving member 151 can move and move until the first mating portion 1511 is fully accommodated in the limiting notch 15231. At this time, the locking member 14 is aligned with the locking portion 112, movement of the first driving member 151 drives the locking member 14 to move, and the first driving member 151 pushes the locking member 14 out of the locking opening 122 and pushes the locking member 14 into the locking portion 112. After the locking member 14 cooperates and locks with the locking portion 112, assembling the trailer hitch and the connecting housing 11 is completed.

According to an embodiment of the present invention, a first inclined surface 1131 is formed on the first trigger portion 113, and the first inclined surface 1131 is disposed in an inclined configuration in a circumferential direction; and a second inclined surface 15221 is formed on the second trigger portion 1522, and the second inclined surface 15221 is adapted to abut against the first inclined surface 1131 and rotate under pushing of the first inclined surface 1131.

Specifically, FIG. 10 shows structures of the first trigger portion 113 and the second trigger portion 1522. A cover plate 114 is disposed at an end of the connecting housing 11, the cover plate 114 encloses an end of the first locking cavity 111, the first trigger portion 113 is fastened to the cover plate 114 of the connecting housing 11, the first trigger portion 113 extends in a direction away from the cover plate 114, the first inclined surface 1131 inclined in the circumferential direction is formed on the first trigger portion 113, the second inclined surface 15221 is formed on the second trigger portion 1522, and the first trigger portion 113 is in contact with the second trigger portion 1522 through the first inclined surface 1131 and the second inclined surface 15221 and pushes the second trigger portion 1522 to rotate. The first trigger portion 113 is fixedly disposed on the cover plate 114 and cannot rotate, and the second inclined surface 15221 is in contact with the first inclined surface 1131 and is pushed by the first inclined surface 1131 to rotate. After the first trigger portion 113 and the second trigger portion 1522 complete cooperation, the second trigger portion 1522 drives the second mating portion 1521 to rotate, and the first mating portion 1511 is pushed to be accommodated in the limiting notch 15231. At this time, as shown in FIG. 7, the first driving member 151 moves and pushes the locking member 14 from the locking opening 122 into the locking portion 112, and the locking member 14 is restrained and locked by the locking portion 112 and fits against the inner wall of the locking portion 112, thereby stably connecting the trailer hitch to the connecting housing 11.

According to an embodiment of the present invention, the trailer hitch has a mating section 12, the mating section 12 is selectively accommodated in the first locking cavity 111, and a second locking cavity 121 configured to accommodate the locking member 14, the first driving member 151, and the second driving member 152 is formed in the mating section 12.

Specifically, the locking member 14 is translatably disposed in the second locking cavity 121, and the locking member 14 can move out of the second locking cavity 121 and cooperate with the locking portion 112. The first driving member 151 is movably disposed in the second locking cavity 121 and selectively drives the locking member 14 to move, and the first mating portion 1511 is disposed on the first driving member 151. The second driving member 152 is rotatably disposed in the second locking cavity 121 and the second driving member 152 is disposed at the end of the first driving member 151, and the second mating portion 1521 and the second trigger portion 1522 are disposed on the second driving member 152. After the mating section 12 is accommodated in the first locking cavity 111, the second trigger portion 1522 is adapted to rotate under the action of the first trigger portion 113, and the second driving member 152 rotates until the second mating portion 1521 cooperates with the first mating portion 1511 to drive the first driving member 151 to move.

After the trailer hitch is used, it is only necessary to control the first driving member 151 to move downward along the second locking cavity 121 and withdraw the mating section 12 from the first locking cavity 111. Movement of the first driving member 151 causes a side of the locking member 14 away from the locking portion 112 to lose its support. In a manual operation process of pulling the mating section 12 out of the first locking cavity 111, the mating section 12 moves relative to the connecting housing 11, the inner wall of the locking portion 112 pushes the locking member 14 out and the locking member 14 is re-accommodated in the second locking cavity 121. After the locking member 14 disengages from the locking portion 112, the mating section 12 in the first locking cavity 111 is free to move, and the trailer hitch can be detached from the connecting housing 11. After the trailer hitch is taken out, the trailer hitch can be stored in the trunk. This avoids damage to the trailer hitch from an external environment, extends service life of the trailer hitch, and ensures the appearance of the cross beam of the vehicle.

According to an embodiment of the present invention, a locking opening 122 that communicates the second locking cavity 121 with the first locking cavity 111 is provided on the mating section 12, the locking opening 122 is adapted to be aligned with the locking portion 112 after the mating section 12 is accommodated in the first locking cavity 111, and the locking member 14 selectively protrudes from the locking opening 122 and cooperates with the locking portion 112.

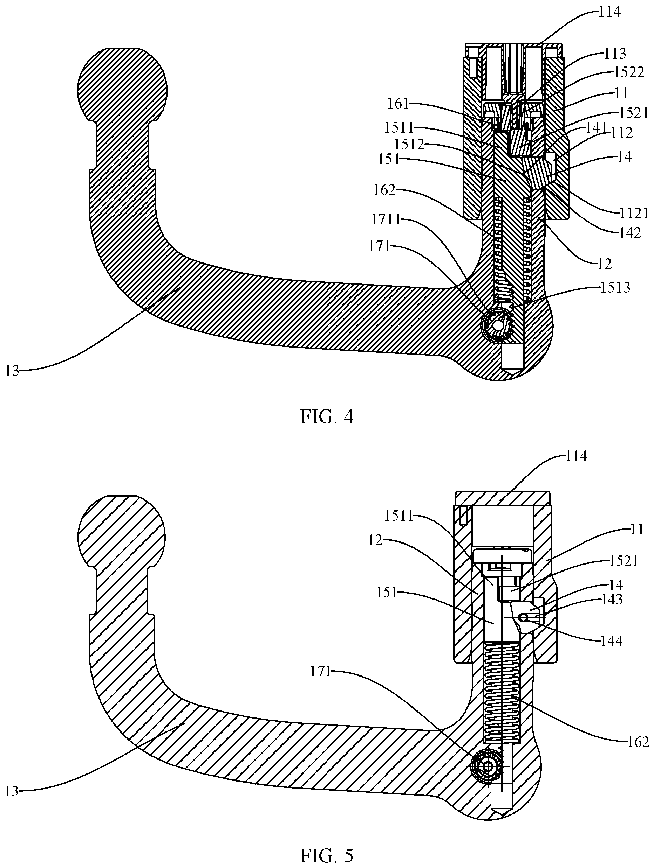

As shown in FIG. 1 and FIG. 4, the first driving member 151 and the second driving member 152 are disposed in the second locking cavity 121, the first mating portion 1511 is disposed on the first driving member 151, the second driving member 152 is rotatably disposed at the end of the first driving member 151, and the second mating portion 1521 and the second trigger portion 1522 are disposed on the second driving member 152. After the mating section 12 is inserted into the first locking cavity 111 and the first trigger portion 113 cooperates with and is connected to the second trigger portion 1522, the second trigger portion 1522 rotates, the first mating portion 1511 and the second mating portion 1521 cooperate and drive the first driving member 151 to move upward, and the first driving member 151 moves and pushes the locking member 14 out of the locking opening 122. When the locking opening 122 is aligned with the locking portion 112, the locking member 14 cooperates and locks with the locking portion 112, and the trailer hitch is locked with and connected to the connecting housing 11, preventing the trailer hitch from falling off and ensuring a stable connection of the trailer hitch. In addition, the locking member 14 fits tightly against the inner wall of the locking portion 112. This can eliminate noise and rattle generated when the trailer hitch cooperates with the connecting housing 11.

According to an embodiment of the present invention, the trailer hitch assembly 1 further includes a first elastic member 161, where the first elastic member 161 is disposed around an outer periphery of the extension section 1524, and the first elastic member 161 is adapted to drive the base 1523 to abut against the first mating portion 1511 in the first state.

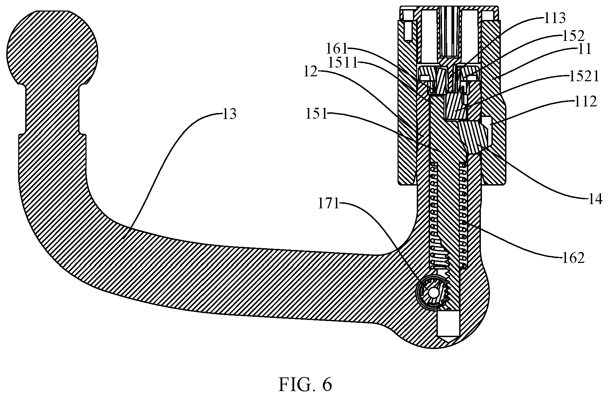

As shown in FIG. 6 to FIG. 12, the first elastic member 161 is disposed on the outer periphery of the extension section 1524, and the first elastic member 161 may be configured as a torsion spring. In the first state, that is, before the first trigger portion 113 cooperates with the second trigger portion 1522, under an action of a torsion force of the torsion spring in a normal state, at least a part of the first mating portion 1511 always abuts against the second mating portion 1521, thereby restricting movement of the first driving member 151. After the first trigger portion 113 cooperates with the second trigger portion 1522, the first inclined surface 1131 on the first trigger portion 113 abuts against the second inclined surface 15221 on the extension section 1524, the extension section 1524 rotates under pushing of the first trigger portion 113, the extension section 1524 rotates and applies force to the first elastic member 161 to overcome the torsion force of the torsion spring and push the base 1523 to rotate. In this way, the first driving member 151 can move and the first mating portion 1511 is accommodated in the limiting notch 15231. Only when the first driving member 151 moves, can the locking member 14 be driven to move and cooperate and lock with the locking portion 112. In this application, the first elastic member 161 is disposed on the outer periphery of the extension section 1524, so that it can be ensured that the second mating portion 1521 always abuts against the first mating portion 1511 in the first state. In addition, in the second state, the first elastic member 161 can drive the first mating portion 1511 to rotate, so that the first driving member 151 can move, and locking of the trailer hitch and the connecting housing 11 is implemented. The structure of the second driving member 152 is simple, and a locking arrangement of the trailer hitch and the connecting housing 11 is simple and convenient, thereby improving convenience of use of the trailer hitch assembly 1.

In some embodiments, a limiting portion 163 is further disposed around an outer periphery of the first elastic member 161, and the limiting portion 163 covers the outer periphery of the first elastic member 161 and is fastened to the outer periphery of the extension section 1524, thereby preventing the first elastic member 161 from disengaging from a connection with the extension section 1524, and improving connection stability of the first elastic member 161. In addition, the limiting portion 163 can define a deformation direction of the first elastic member 161 to control an angle at which the first elastic member 161 drives the base 1523 to rotate, thereby ensuring that the first mating portion 1511 can enter the limiting notch 15231 after the second mating portion 1521 rotates, and ensuring that the trailer hitch can smoothly cooperate with and be connected to the connecting housing 11.

According to an embodiment of the present invention, a third inclined surface 141 adapted to cooperate with the first driving member 151 is formed on a side of the locking member 14 facing the first driving member 151, a fourth inclined surface 1512 is formed on the first driving member 151, and the fourth inclined surface 1512 is adapted to abut against the third inclined surface 141 and push the locking member 14 to move toward the locking portion 112.

As shown in FIG. 4, the third inclined surface 141 is formed on the side of the locking member 14 facing the first driving member 151, and the fourth inclined surface 1512 is formed on the first driving member 151. In a process in which the first mating portion 1511 on the first driving member 151 enters the limiting notch 15231, the fourth inclined surface 1512 abuts against the third inclined surface 141, and the first driving member 151 moves and pushes the locking member 14 out of the locking opening 122. When the first mating portion 1511 is fully accommodated in the limiting notch 15231, the locking opening 122 is aligned with the locking portion 112. At this time, the first driving member 151 abuts against the third inclined surface 141 through the fourth inclined surface 1512 and pushes the locking member 14 into the locking portion 112, the locking member 14 cooperates with the locking portion 112, and the locking portion 112 restricts movement of the locking member 14, thereby preventing the locking member 14 from disengaging from the locking portion 112, and implementing a locking connection between the trailer hitch and the connecting housing 11. In this application, movement of the first driving member 151 pushes the locking member 14 to lock with the locking portion 112, thereby implementing locking of the trailer hitch and the connecting housing 11. The structure is simple, operation is convenient, and the locking member 14 fits tightly against the inner wall of the locking portion 112. This helps eliminate rattling generated by cooperation between the trailer hitch and the connecting housing 11, and improves user experience.

According to an embodiment of the present invention, an unlocking inclined surface 142 is formed on the locking member 14, a locking groove adapted to accommodate the locking member 14 is provided on the locking portion 112, a mating inclined surface 1121 adapted to abut against the unlocking inclined surface 142 is formed on the locking groove, and the mating inclined surface 1121 is adapted to guide the locking member 14 into the second locking cavity 121 when the first mating portion 1511 disengages from the limiting notch 15231.

As shown in FIG. 4, the unlocking inclined surface 142 is formed on a side of the locking member 14 facing the locking portion 112, and the locking groove is provided on the locking portion 112. After the first mating portion 1511 is accommodated in the limiting notch 15231, the locking member 14 enters the locking groove and cooperates and locks with the locking groove. The locking groove restricts movement of the locking member 14, so that the locking member 14 cannot disengage from the locking groove. After the trailer hitch is used, the mating portion may be disengaged from the connecting housing 11. In this process, the first driving member 151 moves in a direction away from the limiting notch 15231, the mating inclined surface 1121 in the locking groove abuts against the unlocking inclined surface 142 on the unlocking member 171, and the mating inclined surface 1121 provides a horizontal force to the unlocking member 171 and pushes the locking member 14 into the locking opening 122, so that the mating section 12 is disengaged from a locked state with the connecting housing 11, and the trailer hitch can be pulled out. In this application, the locking member 14 and the locking portion 112 cooperate through the unlocking inclined surface 142 and the mating inclined surface 1121, so that an unlocking operation of the locking member 14 and the locking portion 112 can be implemented. An unlocking structure between the trailer hitch and the connecting housing 11 is simple, and operation is convenient.

According to an embodiment of the present invention, a limiting groove 143 extending toward the locking portion 112 is provided on the locking member 14, a fixing shaft 144 is disposed in the second locking cavity 121, one end of the fixing shaft 144 is connected to an inner wall of the second locking cavity 121, and the other end of the fixing shaft 144 is accommodated in the limiting groove 143 and defines a moving direction of the locking member 14.

As shown in FIG. 5, the limiting groove 143 is provided on the locking member 14, the limiting groove 143 is configured as a U-shaped groove and extends toward the locking portion 112, an opening facing the locking portion 112 is provided on the limiting groove 143, the fixing shaft 144 is disposed in the second locking cavity 121, the one end of the fixing shaft 144 is fastened to an inner wall of the second locking cavity 121, and the other end of the fixing shaft 144 extends from the opening into the limiting groove 143 and is accommodated in the limiting groove 143. A plurality of spaced-apart limiting protrusions are provided on at least a part of an outer periphery of the fixing shaft 144, and the limiting protrusions cooperate with an inner wall of the limiting groove 143 and restrict a moving direction of the locking member 14. In the first state, the first mating portion 1511 abuts against the second mating portion 1521, and the first driving member 151 cannot move toward the limiting notch 15231 in an extending direction of the second locking cavity 121. In this process, the locking member 14 can still protrude from the locking opening 122. However, due to restriction achieved by cooperation between the fixing shaft 144 and the limiting groove 143, the locking member 14 can protrude from the locking opening 122 but cannot disengage from the locking opening 122, thereby preventing the locking member 14 from disengaging from the trailer hitch, and ensuring operational safety of the locking member 14. In addition, since the plurality of limiting protrusions are provided in a circumferential direction of the fixing shaft 144, the limiting protrusions cooperate with the inner wall of the limiting groove 143 on the locking member 14, thereby ensuring that the locking member 14 does not rotate circumferentially in a process of moving along an extending direction of the limiting groove 143, improving operational stability of the locking member 14, ensuring that the locking member 14 does not generate rattling with an inner wall of the locking opening 122, and improving user experience.

According to an embodiment of the present invention, the trailer hitch assembly 1 further includes an unlocking member 171, where the unlocking member 171 is rotatably disposed at a bottom of the second locking cavity 121, and the unlocking member 171 selectively drives the first driving member 151 to move along the extending direction of the second locking cavity 121.

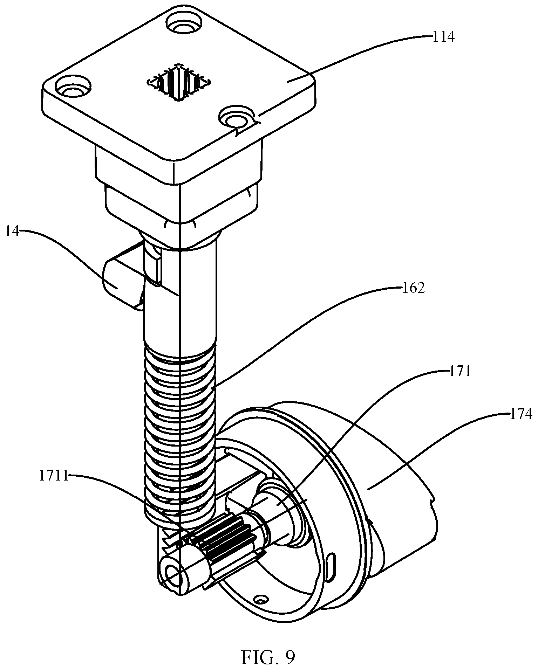

As shown in FIG. 1 and FIG. 9, the unlocking member 171 is rotatably disposed at the bottom of the second locking cavity 121, first mating teeth 1711 adapted to cooperate with the first driving member 151 are disposed around an outer periphery of the unlocking member 171, and second mating teeth 1513 cooperating with the first mating teeth 1711 are formed on a side of the first driving member 151 facing the unlocking member 171. The first mating teeth 1711 and the second mating teeth 1513 are meshingly connected. Rotating the unlocking member 171 can drive the first driving member 151 to move along an extending direction of the second locking cavity 121 away from the second mating portion 1521. Then, the mating section 12 can be pulled out of the first locking cavity 111 by performing a manual operation. As the first driving member 151 moves, the third inclined surface 141 and the fourth inclined surface 1512 no longer abut each other, the locking member 14 is pushed by the mating inclined surface 1121 into the locking opening 122, and a locked connection between the mating section 12 and the connecting housing 11 is disengaged, thereby facilitating manual pull-out and storage of the trailer hitch. In this application, the unlocking member 171 is disposed to drive the first driving member 151 to move, so that a locked state between the mating section 12 and the connecting housing 11 is released. The structure is simple, and operation is convenient.

In some embodiments, the unlocking member 171 can be configured as a gear shaft, first mating teeth 1711 are disposed around an outer periphery of one end of the gear shaft facing the first driving member 151, and a hole of a key 172 is provided at the other end of the gear shaft. A user can insert the key 172 into the hole of the key 172 and rotate the gear shaft, thereby driving the first driving member 151 to move. A shaft sleeve 173 is disposed on an outer periphery of the gear shaft to protect the gear shaft. A protective sleeve 174 is disposed outside the hole of the key 172 to protect safety of the hole of the key 172 and prevent the hole of the key 172 from being damaged externally.

In some embodiments, a fifth inclined surface 175 is formed at an end portion of the unlocking member 171, a sixth inclined surface 1525 cooperating with the fifth inclined surface 175 is formed at an end portion of the first driving member 151 facing the unlocking member 171, and the unlocking member 171 rotates and drives the first driving member 151 to move through the fifth inclined surface 175, thereby implementing an unlocking process.

According to an embodiment of the present invention, the trailer hitch assembly 1 further includes a second elastic member 162, where the second elastic member 162 is disposed between the first driving member 151 and the second locking cavity 121.

As shown in FIG. 9, the second elastic member 162 is sleeved on the first driving member 151, one end of the second elastic member 162 is fastened to the first driving member 151, and the other end of the second elastic member 162 is fastened to the inner wall of the second locking cavity 121. When the trailer hitch and the connecting housing 11 are disconnected, the first mating portion 1511 abuts against the second mating portion 1521 or is located below the second mating portion 1521. At this time, the second elastic member 162 is compressed and stores elastic potential energy, and the second elastic member 162 restricts the first mating portion 1511 from moving toward the second mating portion 1521. In a process of connecting the trailer hitch and the connecting housing 11, the first trigger portion 113 cooperates with the second trigger portion 1522 and pushes the second trigger portion 1522 to rotate, the first mating portion 1511 moves toward the limiting notch 15231 until the first mating portion 1511 is accommodated in the limiting notch 15231, the first driving member 151 moves upward, the second elastic member 162 releases the elastic potential energy and deforms, and the second elastic member 162 can push the first mating portion 1511 to move. This accelerates a speed at which the first mating portion 1511 enters the limiting notch 15231, causes the locking member 14 to quickly move to the locking portion 112 and cooperate with and lock to the locking portion 112, prevents the trailer hitch from disengaging from the connecting housing 11, and permits the stable connection between the trailer hitch and the connecting housing 11. In addition, the locking member 14 fits tightly against an inner wall of the locking groove. This can eliminate rattling generated by cooperation between the trailer hitch and the connecting housing 11.

In summary, according to the trailer hitch assembly 1 of the present invention, cooperation between the trailer hitch and the connecting housing 11 is simple, the connection is stable, and insertion and pull-out of the trailer hitch are convenient. In this application, the locking member 14, the first driving member 151, the second driving member 152, and the unlocking member 171 are disposed on the mating section 12, so that the first trigger portion 113 and the locking portion 112 in the connecting housing 11 simply and conveniently cooperate to implement locking and unlocking of the trailer hitch and the connecting housing 11. The trailer hitch assembly 1 has a simple structure and high reliability, mounting and dismounting operations of the trailer hitch are simple, and no wobbling or rattle is generated when the trailer hitch cooperates with the connecting housing 11, thereby providing better user experience.

The trailer hitch has the mating section 12 and a hitch section 13 connected to each other. The hitch section 13 can be connected to another device, so that the trailer hitch can tow another device to move. Another device may be a vehicle, a cargo, or the like. When the trailer hitch is not in use, a ball head cap 131 can be disposed at an end portion of the hitch section 13 to protect the trailer hitch. The mating section 12 can be accommodated in the first locking cavity 111 and is connected to the connecting housing 11 or is disconnected from the connecting housing 11 and withdrawn from the first locking cavity 111, to assemble the trailer hitch with the cross beam of the vehicle or remove the trailer hitch from the cross beam of the vehicle. To permit the stable connection between the trailer hitch and the connecting housing 11, the locking member 14 is disposed in the second locking cavity 121 in the trailer hitch. After the mating section 12 enters the first locking cavity 111 and cooperates with the first trigger portion 113 in the first locking cavity 111, the locking member 14 protrudes from the locking opening 122 and moves to the locking portion 112 in the connecting housing 11 to cooperate and lock with the locking portion 112, thereby preventing the trailer hitch from disengaging from the connecting housing 11 during use, and ensuring operational safety of the trailer hitch.

The first driving member 151 and the second driving member 152 are disposed in the second locking cavity 121, the first mating portion 1511 is disposed on the first driving member 151, the second driving member 152 is rotatably disposed at the end of the first driving member 151, and the second mating portion 1521 and the second trigger portion 1522 are disposed on the second driving member 152. After the mating section 12 is inserted into the first locking cavity 111 and the first trigger portion 113 cooperates with and is connected to the second trigger portion 1522, the second trigger portion 1522 rotates, the first mating portion 1511 and the second mating portion 1521 cooperate and drive the first driving member 151 to move upward, and the first driving member 151 moves and pushes the locking member 14 out of the locking opening 122. When the locking opening 122 is aligned with the locking portion 112, the locking member 14 cooperates with and locks to the locking portion 112, and the trailer hitch is locked with and connected to the connecting housing 11, preventing the trailer hitch from falling off and ensuring a stable connection of the trailer hitch. In addition, the locking member 14 fits tightly against the inner wall of the locking portion 112. This can eliminate noise and rattling generated when the trailer hitch cooperates with the connecting housing 11.

After the trailer hitch is used, it is only necessary to control the first driving member 151 to move downward along the second locking cavity 121 and withdraw the mating section 12 from the first locking cavity 111. Movement of the first driving member 151 causes a side of the locking member 14 away from the locking portion 112 to lose its support. In a manual operation process of pulling the mating section 12 out of the first locking cavity 111, the mating section 12 moves relative to the connecting housing 11, the inner wall of the locking portion 112 pushes the locking member 14 out and the locking member 14 is re-accommodated in the second locking cavity 121. After the locking member 14 disengages from the locking portion 112, the mating section 12 in the first locking cavity 111 is free to move, and the trailer hitch can be detached from the connecting housing 11. After the trailer hitch is taken out, the trailer hitch can be stored in the trunk. This avoids damage to the trailer hitch from an external environment, extends service life of the trailer hitch, and ensures the appearance of the cross beam of the vehicle.

The following briefly describes a vehicle according to the present invention.

The vehicle according to the present invention includes the trailer hitch assembly 1 according to any one of the foregoing embodiments. Because the vehicle according to the present invention includes the trailer hitch assembly 1 according to any one of the foregoing embodiments, mounting and dismounting of the trailer hitch of the vehicle according to the present invention are simpler and faster, storage of the trailer hitch is convenient, and user experience is better.

In the descriptions of the present invention, it will be understood that an orientation or a position relationship indicated by the term "center", "longitudinal", "lateral", "length", "width", "thickness", "upper", "lower", "front", "rear", "left", "right", "vertical", "horizontal", "top", "bottom", "inside", "outside", "clockwise", "counterclockwise", "axial", "radial", "circumferential", or the like is an orientation or a position relationship shown in the accompanying drawings, and is merely intended to facilitate descriptions and simplify descriptions of the present invention, but is not intended to indicate or imply that a specified apparatus or element needs to have a specific orientation, be constructed in a specific orientation, and operate in a specific orientation. Therefore, such terms cannot be construed as a limitation on the present invention.

In the descriptions of the present invention, "a first feature" and "a second feature" may include one or more features.

In the descriptions of the present invention, "a plurality of" means two or more.

In the descriptions of the present invention, the first feature being "above" or "below" the second feature may include direct contact between the first feature and the second feature, or indirect contact between the first feature and second feature through another feature therebetween.

In the descriptions of the present invention, the first feature being "over", "above", and "higher than" the second feature includes the first feature being directly above or obliquely above the second feature, or merely indicates that a horizontal height of the first feature is greater than that of the second feature.

In the descriptions of this specification, reference terms such as "an embodiment", "some embodiments", "example embodiment", "example", "specific example", or "some examples" mean that specific features, structures, materials, or characteristics described with reference to the embodiments or examples are included in at least one embodiment or example of the present invention. In this specification, example expressions of the foregoing terms do not necessarily mean the same embodiment or example. Furthermore, the described specific features, structures, materials, or characteristics may be combined in a suitable manner in any one or more embodiments or examples.

Although embodiments of the present invention are shown and described, a person of ordinary skill in the art will understand that various changes, modifications, replacements, and variations can be made to the embodiments, without departing from the principles and purposes of the present invention. The scope of the present invention is defined by the claims and their equivalents.

## Claims

1. A trailer hitch assembly, comprising:
a connecting housing, a first locking cavity being formed in the connecting housing, and a locking portion and a first trigger portion being disposed in the first locking cavity; and
a trailer hitch, a part of the trailer hitch being adapted to be accommodated in the first locking cavity, the trailer hitch comprising a driving member and a locking member, and the first trigger portion triggering a part of the driving member to cause the driving member to drive the locking member to lock with the locking portion.

2. The trailer hitch assembly according to claim 1, the driving member comprising:
a first driving member, the first driving member being movably disposed on the trailer hitch and being adapted to drive the locking member to move; and
a second driving member, the second driving member being rotatably disposed on the trailer hitch to switch between a first state and a second state, and the second driving member being adapted to cooperate with the first trigger portion to rotate; and
in the first state, the second driving member restricting movement of the first driving member, and in the second state, the second driving member rotating to allow the first driving member to move and drive the locking member to lock with the locking portion.

3. The trailer hitch assembly according to claim 2, a second trigger portion being disposed on the second driving member, and the second trigger portion being adapted to rotate to the second state under an action of the first trigger portion.

4. The trailer hitch assembly according to claim 3, a first mating portion being disposed on the first driving member, and a second mating portion being disposed on the second driving member;
in the first state, the first mating portion abutting against the second mating portion to restrict movement of the first driving member; and
in the second state, the second mating portion rotating to allow the first mating portion to move.

5. The trailer hitch assembly according to claim 4, a limiting notch adapted to accommodate the first mating portion being provided on the second mating portion, and the limiting notch being adapted to accommodate movement of the first driving member in the second state.

6. The trailer hitch assembly according to claim 5, the second driving member comprising:
a base, the second mating portion being disposed on the base, and the limiting notch being provided on the second mating portion.

7. The trailer hitch assembly according to claim 6, the second driving member further comprising:
an extension section, the extension section being disposed at an end of the base away from the first driving member, and the second trigger portion being disposed at a top of the extension section to be adapted to cooperate with the first trigger portion.

8. The trailer hitch assembly according to claim 7, a first inclined surface being formed on the first trigger portion, and the first inclined surface being disposed in an inclined manner in a circumferential direction; and
a second inclined surface being formed on the second trigger portion, and the second inclined surface being adapted to abut against the first inclined surface and rotating under pushing of the first inclined surface.

9. The trailer hitch assembly according to claim 8, the trailer hitch having a mating section, the mating section being selectively accommodated in the first locking cavity, and a second locking cavity configured to accommodate the locking member, the first driving member, and the second driving member being formed in the mating section.

10. The trailer hitch assembly according to claim 9, a locking opening that communicates the second locking cavity with the first locking cavity being provided on the mating section, the locking opening being adapted to be aligned with the locking portion after the mating section is accommodated in the first locking cavity, and the locking member selectively protruding from the locking opening and cooperating with the locking portion.

11. The trailer hitch assembly according to any one of claims 7 to 10, further comprising:
a first elastic member, the first elastic member being disposed around an outer periphery of the extension section, and the first elastic member being adapted to drive the base to abut against the first mating portion in the first state.

12. The trailer hitch assembly according to any one of claims 9 to 11, a third inclined surface adapted to cooperate with the first driving member being formed on a side of the locking member facing the first driving member, a fourth inclined surface being formed on the first driving member, and the fourth inclined surface being adapted to abut against the third inclined surface and push the locking member to move toward the locking portion.

13. The trailer hitch assembly according to claim 12, an unlocking inclined surface being formed on the locking member, a locking groove adapted to accommodate the locking member being provided on the locking portion, a mating inclined surface adapted to abut against the unlocking inclined surface being formed on the locking groove, and the mating inclined surface being adapted to guide the locking member into the second locking cavity when the first mating portion disengages from the limiting notch.

14. The trailer hitch assembly according to claim 13, a limiting groove extending toward the locking portion being provided on the locking member, a fixing shaft being disposed in the second locking cavity, one end of the fixing shaft being connected to an inner wall of the second locking cavity, and the other end of the fixing shaft being accommodated in the limiting groove and defining a moving direction of the locking member.

15. The trailer hitch assembly according to any one of claims 9 to 14, further comprising:
an unlocking member, the unlocking member being rotatably disposed at a bottom of the second locking cavity, and the unlocking member selectively driving the first driving member to move along an extending direction of the second locking cavity.

16. The trailer hitch assembly according to any one of claims 9 to 15, further comprising:
a second elastic member, the second elastic member being disposed between the first driving member and the second locking cavity.

17. A vehicle, comprising a vehicle body and the trailer hitch assembly according to any one of claims 1 to 16, and the connecting housing being fixed to the vehicle body.
